(19) Europäisches Patentamt
European Patent Office
Office européen des brevets

(11) **EP 1 839 799 A1**

(12) **EUROPEAN PATENT APPLICATION**

(43) Date of publication:
**03.10.2007 Bulletin 2007/40**

(51) Int Cl.:
**B23K 26/10** (2006.01)    **G02B 26/10** (2006.01)

(21) Application number: **06425204.2**

(22) Date of filing: **27.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SEI S.p.A.**
**24035 Curno BG (IT)**

(72) Inventor: **Fustinoni, Ettore**
**24126 Bergamo (IT)**

(74) Representative: **Gislon, Gabriele et al**
**Marietti, Gislon e Trupiano S.r.l.**
**Via Larga, 16**
**20122 Milano (IT)**

(54) **Laser apparatus for product treatment with a scanning mirror rotatable in two perpendicular directions**

(57)    The present invention relates to an apparatus (1) for treating a product (40) by means of at least one beam (3) of laser light generated by an external laser source (4). The apparatus (1) comprises a mirror (2) rotatable about a first axis ($X_m$) to reflect the beam (3) of laser light towards the product (40) positioned on a work table (5), in a first direction (X). The mirror (2) is rotatable about a second axis ($Y_m$), transversal to the first axis ($X_m$), to reflect the beam (3) of laser light towards the product in a second direction (Y).
The apparatus comprises laser light beam auto focus means (G) that take into account the inertia and transients of the mirror (2) displacements.

Fig.1

## Description

The present invention relates to a laser apparatus for treating products, particularly an apparatus for cutting and/or marking products by means of laser light.

Apparatuses allowing different materials to be cut, marked, drilled, etc. by means of beams of laser light have been available on the market for some time. For example, the laser apparatuses are used for cutting or marking semiprocessed or finished products made of methacrylate, plastic, acetate, polyester, wood, paper, leather, metal or also organic or synthetic materials.

The cutting (through-cutting) is obtained by impinging the material with a high-intensity laser beam capable of passing through the material all along the thickness thereof. The marking (face-cutting) is obtained by impinging the material with a laser beam having a lower intensity, such that only the surface of the material is altered, thereby defining a pattern, drawing, logo, wordings, etc.

Traditional laser apparatuses are ideally grouped into categories, according to the type of laser source with which they are provided, how the beam of laser lights are directed, focused, etc.

A category known in the field is the "galvanometric" laser apparatuses. These apparatuses are provided with a laser light source that emits a laser beam having a calibrated power, which is focused on the product to be worked. The laser beam is generally guided by two movable scanning mirrors, each pivoting about an axis thereof, which are driven by galvanometric motors. The axes of rotation of the two mirrors are orthogonal to each other. A first scanning mirror, by rotating, reflects the laser beam on the second mirror along a first scanning axis X, and the second scanning mirror, by rotating, reflects the laser beam along a second scanning axis Y on the product to be treated. Practically, by controlling the rotation of the mirrors, the laser beam is directed on a point of the work table having generic x, y coordinates. The beam going out from the second mirror is focused by a focusing optical assembly on the product being worked. The two mirrors and the focusing optical assembly are enclosed in a fixed structure, which is generally called the "galvo head".

A traditional galvanometric laser apparatus is described in the International Patent Application WO 2004/007136, in the name of BORGOLTZ Jean-Philippe et al.. Galvanometric laser apparatuses are generally used for treating products that can be placed on a work table having size from about 50 x 50 mm$^2$ to 500 x 500 mm$^2$. A further increase in the work table surface is usually associated with an increase in the diameter of the laser beam focused on the table and a corresponding decrease of the power thereof. In other words, when the area of the work plane is increased, the density of the laser beam focused on the table is decreased, to the detriment of the effectiveness and/or accuracy of the processes to be carried out (such as the cutting of the workpiece may become impossible). The products having a larger size are generally treated with plotter laser apparatuses, i.e. provided with a focusing head being movably positioned on a cross-piece, which is movable, in turn, on the product placed on the work table, and intended to direct to the product a laser beam supplied by an external source. The plotter apparatuses are provided with large-sized work tables, such as 2000 x 2000 mm$^2$, and thus allow treating products having a greater size (up to four times larger) than those to be processed with a traditional galvanometric apparatus.

Generally, the galvanometric apparatuses exhibit a good dynamic performance as the mirrors, having reduced mass mass, can be moved with high accelerations, which are greater than those obtainable with the optical assemblies and the supports thereof in the plotter apparatuses. That is, the mirror mass is minimized such as to be driven by the galvanometric motors in an optimized manner, in favour of the productivity of the working process.

The need for having galvanometric laser apparatuses capable of operating, with the above-mentioned advantages, on large-sized products, i.e. products currently subjected to laser processing with plotter apparatuses, on work tables sized up to 2000 x 2000 mm$^2$ or more has been felt for some time. For example, the need is felt to have a galvanometric laser apparatus allowing to cut and/or mark products having a great extension, such as tapes made of natural or synthetic fabric, organic materials such as leather or hide, sheets made of organic or plastic material for various applications (electronics and labelling fields, etc.), etc.

Conventional galvanometric laser apparatuses are not suitable to carry out processing on large work tables as those typical in plotter apparatuses. The density (and hence the power) of the laser beam to be focused on the product decreases as the extension of the product increases, i.e. as the extension of the work table increases.

To a first approximation, the length of the work table side is proportional to the distance $h$ of the second mirror from the work table and the maximum angle of rotation of the mirror $\theta_{max}$, according to the approximate formula:

$$lato \propto h \cdot \tan(2\theta_{max}).$$

With good approximation, the parameter h can be assumed to be about equal to the focal distance $f$ of the focusing assembly. In other words, when the size of the work table is increased, the focal distance $f$ is also correspondingly increased.

On the other hand, the effectiveness of the action of the laser beam on the material being processed is strictly related to the density of the laser beam at the product (spot density), which density is inversely proportional to the focal distance $f$.

The density of a laser beam on the product is, in turn, related to the diameter $D_s$ of the spot generated in the focus point. In mathematical terms, if the laser beam has a diameter $D$ and is collimated by a focusing assembly having focal distance $f$, the diameter of the spot focused on the product is:

$$D_S = \frac{4\lambda}{\pi} \cdot \frac{M^2 \cdot f}{D},$$

where $\lambda$ is the wavelength of the laser light, $M^2$ is a laser beam quality characterizing factor (ideally equal to 1, normally lower than 1.5).

The diameter $D_s$ of the spot is inversely proportional to the diameter $D$ of the collimated laser beam on the focusing assembly, i.e. the spot diameter of the laser beam $D_s$ depends on the size of the scanning mirror.

To obtain sufficient power density values for the laser beam on a large work table (large $f$ and small $D_S$), it is required that $D$ is increased, $\lambda$ and $M^2$ being laser light source characterizing constants.

In other words, to provide a galvanometric laser apparatus capable of working on large work tables (as large as 2000 x 2000 mm$^2$ and more) in an effective manner, the equipment must be provided with scanning mirrors having greater size than traditionally provided, and this to the detriment of the inertia loading on the relative galvanometric motors, with obvious negative effects in terms of dynamic performance (accelerations and scan speed of the laser).

The mirror size enlargement negatively affects the power distribution of the laser beam on the product surface, and hence the consistency, effectiveness and quality of processing, because the speed and acceleration transients of the mirror rotation are not easily managed. The mirror size enlargement also dramatically affects, in a negative manner, the apparatus manufacturing cost.

In this type of apparatuses it is assumed that the laser beam incident to the product being processed is moving relative to the product (scanning) at a substantially constant speed. The increase in the inertia values leads to higher transients upon changes in the direction and/or speed of the mirrors, i.e. a longer time is required to rotate the mirrors, with clear consequences in terms of processing quality. For example, the laser beam impinging on the product for a longer time than predicted, due to the higher inertias, is very likely to cause undesired burnings on the product.

The mirrors are heated by the reflected laser beam. Usually, the power of the laser beam is limited to prevent that the mirrors may be overheated and possibly deformed. A further drawback with the traditional galvanometric laser systems is the difficulty of using high power lasers, due to the heat generated therefrom. The mirror is subjected to heating (in fact, the mirror absorbs a percentage of the incident laser light) and hence it must be cooled, i.e. the thermal energy accumulated by the mirror is required to be dissipated to avoid that the mirror may deform. The fact that the system requires to be provided with heat dissipation means contrasts with the above requirement of minimizing the mirror inertia.

At the same mirror size and at the same laser power as predicted, when the focal distance $f$ is increased (to have a correspondingly larger work table), an increase is observed in the diameter of the laser beam incident on the product (spot) and a decrease in its power density, with a clear loss of effectiveness and accuracy of the apparatus.

Briefly, high dynamic performance at low cost is hardly obtained with plotter systems provided with a large work table. With the traditional galvanometric laser systems provided with mirrors having a large diameter, it is difficult to maintain the dynamic performance constant and work with high-power lasers, due to the difficulties associated with the dissipation of the heat accumulated by the mirrors.

The object of the present invention is to provide a laser apparatus that solves the problems of conventional solutions in a simple and effective manner, while being cost-effective and reliable.

A further object of the present invention is to provide a laser apparatus allowing to effectively operate on large-sized work tables, as large as 2000 x 2000 mm$^2$ or even larger, with high dynamic performance, which can be compared with those obtainable with galvanometric apparatuses provided with a work table with size smaller than 500 x 500 mm$^2$.

It is also an object of the present invention to provide a laser apparatus allowing to obtain an increase in the productivity as compared with traditional laser apparatuses used to carry out processing such as cutting, engraving, marking, burnishing, etc., on materials of various nature such as semiprocessed or finished products made of methacrylate, plastic, acetate, polyester, wood, paper, leather, metal, or also products made of organic or synthetic materials.

These and other objects are achieved by the present invention concerning an apparatus for treating a product by means of at least one beam of laser light generated by an external laser source, comprising a mirror being rotatably supported about a first axis to reflect said at least one beam of laser light, in a first direction, towards said product placed on a work table, characterized in that said mirror is rotatable about a second axis, transversal to said first axis, to reflect said at least one beam of laser light towards said product in a second direction.

Advantageously, the laser apparatus according to the present invention comprises an individual mirror rotatable about two axes, preferably orthogonal to each other, to deflect the laser beam in two transversal directions on the product placed on the work table. This configuration allows adopting a large-sized mirror, large work tables, and a good dynamic performance.

The beam of laser light is generated by a conventional source, such as a YAG or $CO_2$ laser generator. The generator power can be high, up to 2000 Watt or higher. The beam of laser light is directed on the return mirror, which deviates the beam to the work table in the first direction or second direction Y.

The mirror is supported by a suitable frame, such as to be raised relative to the work table. The mirror-frame coupling is such that the mirror is allowed to rotate about the two axes. Preferably, this coupling is provided by means of a double-ring joint, similar to a gyroscope. In the preferred embodiment, the return mirror is circular and has a diameter equal to about 50 mm. The mirror may generally have a greater size, for example it may have a diameter equal to about 100 mm.

The mirror is pivoted on a first outer ring such as to rotate about the first axis. The first ring is pivoted, in turn, on a second ring, which has a greater diameter than the first ring, such as to rotate about the second axis. The second ring is fastened either to the frame or support structure.

The two axes of rotation of the mirror are perfectly perpendicular to each other. Thereby, the laser beam is deviated by the mirror to the work table in two orthogonal Cartesian directions $X_p$ and $Y_p$. By controlling the rotation of the return mirror, it is possible to scan the work table surface, and hence the surface of the product to be processed that is placed on this table.

The mirror rotation is controlled by two actuators. Each actuator exerts such a force on a mirror portion as to impart a clockwise or counter-clockwise rotation about the pertinent axis.

In the preferred embodiment of the present invention, each actuator comprises a brushless motor that is firmly engaged to a fixed structure, such as the frame. Advantageously, brushless motors are more cost-effective than the traditional galvanometric motors used with the known apparatuses. Brushless motors are further suitable to move the mirror of the apparatus, which has greater mass than the traditional small-sized mirrors adopted in the galvanometric apparatuses.

The motor drives a worm screw, the end of which is engaged to a mirror portion, at a predetermined distance from the first/second axes of rotation of the mirror. The forward worm screw movement determines the rotation of the mirror in a first direction (forward stroke); the backward worm screw movement determines the rotation of the mirror in opposite direction (backward stroke). Alternatively, the backward stroke can be controlled by a counter spring positioned between the actuator and the mirror.

The extent of the rotations that are imposed to the return mirror is controlled by a suitable control unit. The angle of rotation of the mirror about the first axis or about the second axis depends on the travel imposed by the motors to the worm screws of the respective actuators. The actuators are provided with encoders capable of detecting the travel of the worm screw. For example, the actuators are provided with high-resolution optical encoders (chip encoders). The control unit drives the actuators based on the information acquired by the encoders. In other words, the unit carries out a feedback control of the actuators, thereby accurately positioning the beam of laser light on the product placed on the work table.

The control of the actuators is operated such that the energy distribution of the laser beam on the work table, along its path, is uniform as much as possible. Practically, the control unit operates based on algorithms providing the compensation of the inertias and transients of the mirror.

The apparatus is provided with means for focusing the laser beam on the product positioned on the work table. The beam of laser light remains always focused on the product being processed (auto focus) regardless of its path and speed, i.e. regardless of the displacement imposed to the mirror by the relative actuators. Preferably, the focusing means of the laser beam can be feedback-controlled based on the operation of the actuators such that inertias and/or transients in the mirror movement are compensated and the intensity of the focused beam ("dynamic" focusing coordinated with the mirror movement) is maintained quite constant.

Preferably, the worm screws are made of a plastic material with a low friction coefficient, such as Teflon, and continuously lubricated.

The actuator motors are preferably driven by the control unit by means of micro-drivers that are interfaced with CAN OPEN I/O modules.

The return mirror is impinged by a laser beam that may have a high intensity and is thus subjected to be heated. At high temperatures, the mirror may be subjected to undesired deformations that dramatically reduce the apparatus accuracy. To avoid this drawback, the apparatus comprises means for cooling the mirror. The cooling can be obtained by directing an air jet to the mirror. Preferably, the mirror is cooled by means of a cooling liquid circulating in suitable channels arranged at the reflecting surface of the mirror, such as just below the reflecting surface.

According to the present invention the apparatus is provided with a return mirror having a large size as compared to what is provided in the traditional apparatuses and allows treating large-sized products in an effective manner. The work table can have size up to 3000 x 3000 $mm^2$, i.e. considerably larger than a work table of traditional galvanometric laser apparatus, but comparable with a traditional plotter laser apparatus size.

The apparatus according to the present invention allows obtaining high performance. The scanning speed of the laser beam on the product may be as high as 10 m/s. The mirror can be rotatably driven by the actuators thereof, with accelerations exceeding 10g. Thereby, the cutting and/or marking of products can be carried out with a high productivity.

Advantageously, the actuators are made using brushless motors, which are sensibly less expensive than galvanometric motors. Accordingly, the apparatus according to the invention can be manufactured at low cost.

The motors of the actuators are fixed, with clear advantages in terms of inertia and dynamic performance of the apparatus.

Further aspects and the advantages of the present invention will be better understood from the description below, which is to be considered by way of non-limiting example with reference to the annexed figures, in which:

- Fig. 1 is a schematic view of a first apparatus according to the present invention.
- Fig. 1A is a front view of a detail of the apparatus shown in Fig. 1;
- Fig. 2 is a schematic top view of the apparatus shown in Fig. 1;
- Fig. 3 is a schematic front view of the apparatus shown in Fig. 1;
- Fig. 4 is a schematic side view of the apparatus shown in Fig. 1;
- Fig. 5 is a schematic perspective view of the apparatus shown in Fig. 1;
- Fig. 6 is a side, schematic view of a second apparatus in accordance with the present invention;
- Fig. 7 is a perspective view, in phantom, of the apparatus shown in Fig. 6;
- Fig. 8 is a bottom perspective view of the apparatus shown in Fig. 6.

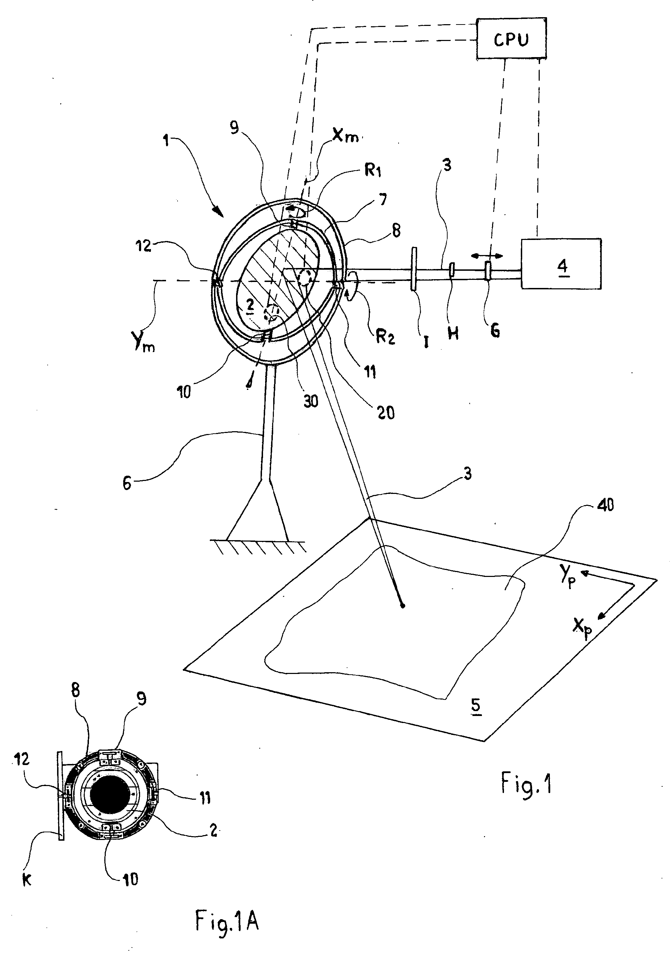

With reference to Fig. 1, the apparatus 1 according to the present invention comprises a return mirror 2 suitable to deflect a laser beam 3, which is generated by a laser source 4 to a work table 5. A product 40 to be subjected to treatment by means of the beam of laser light 3 can be positioned on the work table.

The product may be of various nature, i.e. organic or synthetic, metallic, plastic, etc.. For example, the product may be a leather to be marked or engraved by means of the laser beam, or a metallic piece to be cut or drilled. Generally, the apparatus 1 is intended for cutting, marking, drilling, burnishing and engraving materials of various nature.

The mirror 2 is fastened to a frame 6 in raised position relative to the work table 5. The mirror is rotatable about a first axis $X_m$ to direct the laser beam 3 in a first direction $X_p$ to the work table 5. Advantageously, the mirror 2 is rotatable about a second axis $Y_m$ to direct the laser beam 3 in a second direction $Y_p$ onto the work table 5.

In the embodiment as shown in Fig. 1, the coupling between the mirror 2 and frame 6 is provided by means of two rings 7 and 8, which are configured like a gyroscope. The mirror 2 is pivoted inside the ring 7, as shown in the figure. The mirror 2 is circular and the ring 7 is external of the same mirror. Two pins 9 and 10, which are aligned in the direction $X_m$, allow the mirror 2, which is supported by the ring 7, to rotate clockwise/counter-clockwise in the direction $R_1$. The ring 7 is, in turn, pivoted on the ring 8 external to the ring 7 and on the mirror 2. Two pins 11 and 12, aligned in the direction $Y_m$, engage the ring 7 to the ring 8. The ring 7 rotates clockwise/counter-clockwise in the direction $R_2$, by being supported by the ring 8 that is firmly engaged to the frame 6.

Fig. 1A shows a possible embodiment of the gyroscopic support for the mirror 2. The figure shows the mirror 2 hinged on the ring 8, which is hinged, in turn, on a fixed element K, such as a frame or housing.

The laser light source 4 comprises a traditional laser generator, the power of which preferably ranges between 100 - 2000 W. For example, the laser generator may be of a type known in the art as YAG, or $CO_2$,

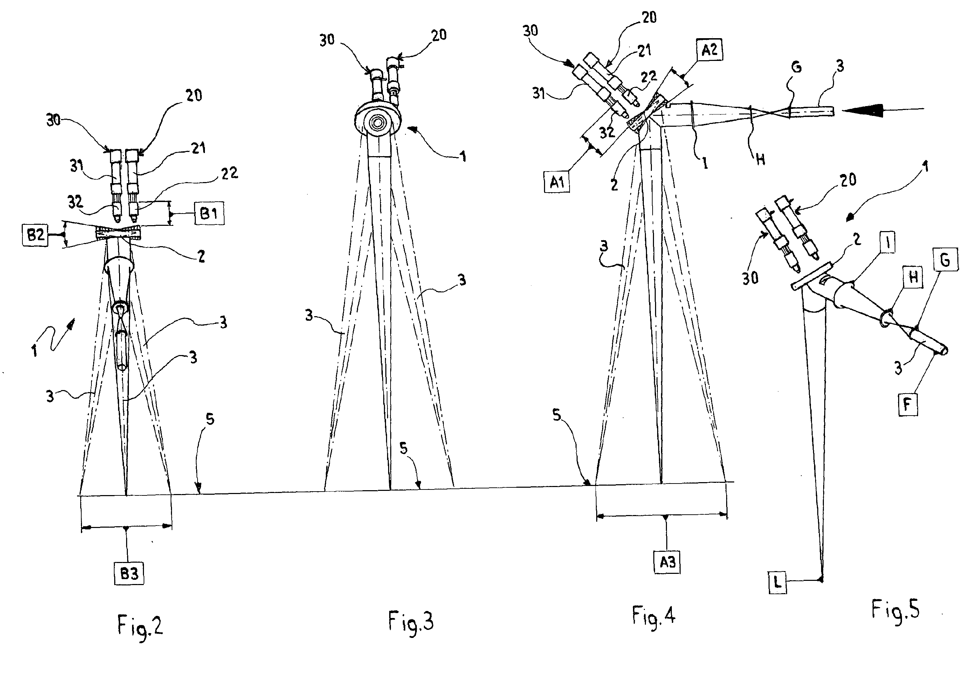

With reference to Fig. 2-5, the apparatus 1 is provided with two actuators 20 and 30 having the function of controlling the rotation of the mirror 2 about the axis $X_m$ and the rotation of the mirror 2 about the axis $Y_m$ respectively. Each of the actuators 20 and 30 acts on a portion of the mirror 2 opposite relative to its reflecting surface.

Each actuator 20, 30 comprises a motor and a control rod that is engaged to the mirror 2 or configured to abut against the same mirror 2. The motor adjusts the extension of the control rod, which, in turn, imparts a corresponding rotation to the mirror 2.

Preferably, the motor is a brushless micro-motor 21, 31 and the control rod is a worm screw 22, 32 driven by the micro-motor. The motors 21, 31 of the actuators 20 and 30 are fixed, for example they are firmly engaged to the frame 6. The worm screw 22, 32 extends between a minimum travel position, corresponding to the maximum clockwise (or vice versa, counter-clockwise) rotation of the mirror, and a maximum travel position, corresponding to the maximum counter-clockwise (or vice versa, clockwise) rotation of the mirror.

With reference to Fig. 2, the reference B1 designates the maximum stroke of the control rod of the actuator 20, i.e. the length comprised between the minimum and maximum extension of the worm screw 22. The reference B2 designates the angle of rotation of the return mirror 2 corresponding to the displacement of the worm screw between the minimum extension and maximum extension positions. The reference B3 designates the maximum distance run by the laser beam 3 in the direction $X_p$ on the work table 5 following the rotation of the mirror 2.

In Fig. 4, the reference A1 designates the maximum stroke of the worm screw 32 of the actuator 30, the reference A2 designates the rotation of the mirror 2 about the axis $Y_m$, and the reference A3 designates the distance that the laser beam 3 runs on the work table 5 in the direction $Y_p$.

Preferably, a counter spring (not shown) is provided between each actuator 20, 30 and the mirror 2, the spring having the function of returning the mirror 2 to an initial position following the rotation controlled by the actuators 20, 30.

The apparatus 1 comprises an optical assembly for focusing the laser beam 3 on the mirror 2. The optical assembly comprises three focusing lenses G, H and I that are arranged upstream of the mirror 2 relative to the direction of the laser beam 3. The laser beam 3 is focused such as to generate a spot L on the product positioned on the work table 5. The power density of the spot L is suitable to allow carrying out the processing on the product in an effective manner.

Said optical assembly is of the "auto focus" type, i.e. it allows focusing the laser beam 3 on the product in an automatic manner. Preferably, the lens G is movable in the direction of the laser beam 3 to focus the laser beam 3 on the product in an accurate manner. The lens G is motor-driven, preferably driven by a brushless motor.

A control unit CPU (Fig. 1) controls the functions of the apparatus 1. Particularly, the control unit CPU operates the motors of the actuators 20, 30 and the motor of the focusing lens G. The apparatus 1 is provided with means for detecting the travel of the worm screws 22, 32 and the travel of the focusing lens G. In the preferred embodiment of the invention, these means comprise high-resolution optical encoders. The control unit CPU operates the motors of the actuators 20, 30 and lens G based on the information supplied by the encoders. Thereby, the unit CPU performs a feedback-control of the operation of apparatus 1, thereby allowing the accurate pointing of the laser beam 3 on the product being processed and the proper focusing thereof. Preferably, the control unit CPU allows the laser beam 3 to be focused in an automatic manner, i.e. it allows implementing an "auto focus" function.

To avoid that the mirror 2 may be overheated, the apparatus can be provided with a cooling system configured to dissipate the heat of the reflecting surface of the same mirror 2. For example, the cooling system can be of the air type, but preferably the cooling of the same mirror 2 is obtained by circulating a coolant in suitable inner channels of the mirror 2. Either the liquid of the chiller of the laser generator 4, or water or a water-glycol solution can be used. The channels can be formed under the reflecting surface of the mirror 2.

The apparatus 1 has multiple advantages as compared with traditional laser apparatuses. Briefly, the apparatus 1 allows obtaining high performance and productivity with large-sized work tables.

The work table 5 may have a considerable size, as large as 3000 x 3000 $mm^2$, or more (the table may also not be square, rather rectangular, circular, etc.). The increase in the surface of the work plane 5 as compared to traditional galvanometric system is feasible since the apparatus 1 uses an individual return mirror 2 having a great diameter, up to 100 mm and more, and a laser source 4 having high power, up to 2000 Watt and more. The operation of the mirror 2 that is driven with the actuators 20, 30 allows obtaining optimum dynamic performance. For example, the laser beam 3 can scan the surface of the product being processed with speeds as high as 10 m/s, or more. The mirror 2 can be driven with accelerations as high as 10g or more.

Generally, the mirror 2 may have a diameter ranging between 50 and 200 mm.

The cost of brushless motors is considerably lower than the cost of the galvanometric motors used in the traditional apparatuses, this being an advantage for the manufacturing cost of the apparatus 1.

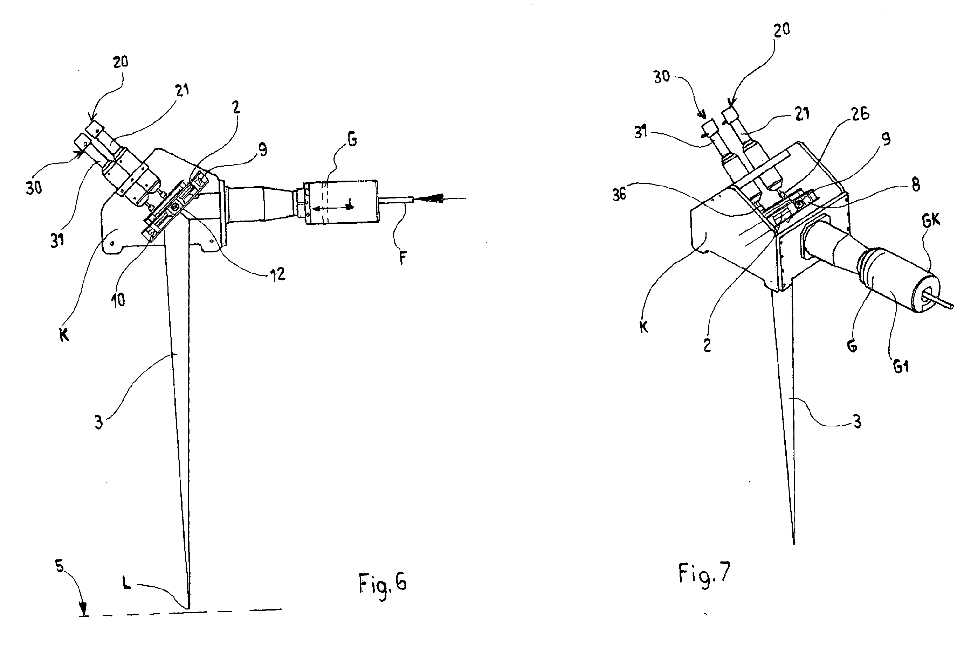

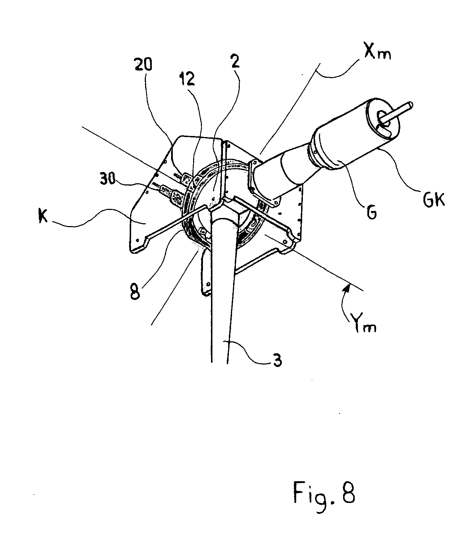

Fig. 6 and 7 refer to an apparatus according to the present invention, in which the mirror 2 is positioned in a housing K. As may be seen, the gyroscopic support formed by the rings 7 and 8 is very compact. The pins 9, 10 and 12 are seen in Fig. 6.

The actuators 20 and 30 act on the mirror 2 by means of fingers 26, 36 which touch the surface of the mirror.

The optical devices G are enclosed in a housing GK. Fig. 7 shows the lens G and the motor G1 thereof, which provides to displace the same within the housing GK for focusing of laser beam 3.

Fig. 8 shows a bottom perspective view of the apparatus. The mirror 2 is hinged to the ring 8, which is, in turn, hinged to the housing K. The mirror is rotatable about the axes $X_m$ and $Y_m$. When the actuator 20 is operated such as to extend or retract the relative finger 26, a rotation of the mirror 2 is determined about the axis $X_m$. When the actuator 30 is operated such as to extend or retract the relative finger 36, a rotation of the mirror 2 is determined about the axis $Y_m$. The operation of the actuators 20 and 30 is coordinated with the operation of the optical devices G such that the focusing of the laser beam 3 on the work table (on the product to be processed) is automatic.

**Claims**

1. An apparatus (1) for treating a product by means of at least one beam of laser light (3) generated by an external laser source (4), comprising a mirror (2) being rotatably supported about a first axis ($X_m$) to reflect said at least one beam of laser light (3), in a first direction ($X_p$), towards said product placed on a work table (5), **characterized in that** said mirror (2) is rotatable about a second axis ($Y_m$), transversal to said first axis ($X_m$), to reflect said at least one beam of laser light (3) towards said product in a second direction ($Y_p$).

2. The apparatus according to claim 1, **characterized in that** said first axis ($X_m$) and said second axis ($Y_m$) are orthogonal.

3. The apparatus according to any preceding claim, **characterized in that** it comprises a first ring (7) external to said mirror (2) and pivoted thereon to be pivotally supported about said first axis ($X_m$), and a

second ring (8), external to said first ring (7) and pivoted thereon to be pivotally supported about said second axis ($Y_m$).

4. The apparatus according to any preceding claim, **characterized in that** it further comprises a first actuator to be engaged to said mirror to drive the rotation about said first axis, and a second actuator to be engaged to said mirror to drive the rotation about said second axis.

5. The apparatus according to claim 4, **characterized in that** each of said first actuator and second actuator comprises a worm screw being engaged to said mirror and operated by a fixed brushless motor.

6. The apparatus according to claim 5, **characterized in that** said first actuator and second actuator are each coupled with an encoder suitable to detect the travel of said worm screw.

7. The apparatus according to claim 6, **characterized in that** it further comprises a unit to control said first actuator and second actuator based on the information detected by the respective encoders.

8. The apparatus according to any claim 4 to 7, **characterized in that** it comprises, for each actuator, a counter spring acting on said mirror to return the latter to a predefined position following a rotation.

9. The apparatus according to any preceding claim, **characterized in that** it further comprises means for controlling the temperature of said mirror.

10. The apparatus according to any preceding claim, **characterized in that** said mirror has a diameter ranging between 50 and 200 mm.

11. The apparatus according to any preceding claim, **characterized in that** said work table has size ranging between 300 x 300 mm$^2$ and 3000 x 3000 mm$^2$.

12. The apparatus according to any preceding claim, **characterized in that** it comprises means (G, H, I) suitable to focus said beam of laser light (3) on said work table (5) regardless of the movement of said mirror (2).

13. A method for treating a product by means of a laser beam (3) generated by a laser light source (4), comprising the step of deflecting by means of a mirror (2) said beam of laser light towards said product being positioned on a work table (5), **characterized in that** it comprises the step of rotating said mirror (2) about a first axis ($X_m$) to deflect said beam of laser light (3) in a first direction (X) and the step of rotating said mirror about a second axis ($Y_m$) to deflect said

beam of laser light (3) in a second direction (Y).

14. The method according to claim 13, **characterized in that** it comprises the step of constantly focusing said beam of laser light (3) on said product regardless of the displacement imparted to said mirror (2).

15. Use of the apparatus according to any preceding claim to carry out a processing of cutting, engraving, marking, burnishing, etc., on said product.

16. Use of the apparatus according to any preceding claim for the laser-light treatment of a product made of a material selected from the synthetic materials, organic materials, methacrylate, plastic, acetate, polyester, wood, paper, leather, metal.

Fig. 1

Fig.1A

Fig.2   Fig.3   Fig.4   Fig.5

EP 1 839 799 A1

Fig.7

Fig.6

Fig. 8

**European Patent Office**

# EUROPEAN SEARCH REPORT

Application Number

EP 06 42 5204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/035178 A (TOYOTA JIDOSHA KABUSHIKI KAISHA ; T. ICHIKAWA ET AL) 21 April 2005 (2005-04-21) | 1,2,4, 10-14 | INV. B23K26/10 G02B26/10 |
| Y | * abstract; figures * | 3,5-7,9 | |
| E | -& EP 1 671 739 A (TOYOTA JIDOSHA KABUSHIKI KAISHA) 21 June 2006 (2006-06-21) * paragraphs [0020] - [0025], [0028], [0029]; figures 1-5 * | 1,2,4, 10-14 | |
| | ----- | | |
| Y | US 2003/038693 A1 (K. TOKUDA ET AL) 27 February 2003 (2003-02-27) * figures 11,12; example 3 * | 3 | |
| | ----- | | |
| Y | US 6 556 598 B1 (P.G. ANGOTT) 29 April 2003 (2003-04-29) * column 2, line 53 - column 3, line 29; figures 1-3,11 * | 5-7 | |
| | ----- | | |
| Y | EP 0 570 152 A (SUMITOMO ELECTRIC INDUSTRIES, LIMITED; TOYOTA JIDOSHA KABUSHIKI KAISHA) 18 November 1993 (1993-11-18) * abstract; figure 1 * | 9 | TECHNICAL FIELDS SEARCHED (IPC) B23K G02B |
| | ----- | | |
| X | DE 100 27 148 A1 (VOLKSWAGEN AG) 6 December 2001 (2001-12-06) * paragraphs [0001], [0012], [0014]; figures * | 1,2,4, 10-16 | |
| | ----- | | |
| X | US 4 678 289 A (A. MATTELIN ET AL) 7 July 1987 (1987-07-07)  * column 1, lines 12-34 * * column 3, line 66 - column 4, line 29; figures * | 1,2,4, 10,11, 13,15,16 | |
| | ----- | | |
| | -/-- | | |

The present search report has been drawn up for all claims

| Place of search | Date of completion of the search | Examiner |
|---|---|---|
| Munich | 1 September 2006 | Jeggy, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 42 5204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 848 104 A (E.V. LOCKE) 12 November 1974 (1974-11-12) <br><br> * column 9, lines 39-60; figures 1,11 * <br> ----- | 1,2,4, 10,11, 13,15,16 | |
| A | PATENT ABSTRACTS OF JAPAN vol. 2000, no. 07, 29 September 2000 (2000-09-29) -& JP 2000 121947 A (NIKON CORP), 28 April 2000 (2000-04-28) * abstract * <br> ----- | 8 | |
| A | US 5 866 894 A (S. BARD ET AL) 2 February 1999 (1999-02-02) * figure 2 * <br> ----- | 3 | |
| | | | **TECHNICAL FIELDS SEARCHED (IPC)** |

The present search report has been drawn up for all claims

| Place of search | Date of completion of the search | Examiner |
|---|---|---|
| Munich | 1 September 2006 | Jeggy, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 42 5204

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2006

| Patent document cited in search report | | Publication date | Patent family member(s) | | Publication date |
|---|---|---|---|---|---|
| WO 2005035178 | A | 21-04-2005 | EP | 1671739 A1 | 21-06-2006 |
| | | | JP | 2005111519 A | 28-04-2005 |
| EP 1671739 | A | 21-06-2006 | JP | 2005111519 A | 28-04-2005 |
| | | | WO | 2005035178 A1 | 21-04-2005 |
| US 2003038693 | A1 | 27-02-2003 | JP | 2003066362 A | 05-03-2003 |
| US 6556598 | B1 | 29-04-2003 | AU | 8065401 A | 05-02-2002 |
| | | | WO | 0208842 A1 | 31-01-2002 |
| EP 0570152 | A | 18-11-1993 | DE | 69301759 D1 | 18-04-1996 |
| | | | DE | 69301759 T2 | 07-11-1996 |
| | | | JP | 2829192 B2 | 25-11-1998 |
| | | | JP | 5318161 A | 03-12-1993 |
| | | | US | 5303081 A | 12-04-1994 |
| DE 10027148 | A1 | 06-12-2001 | NONE | | |
| US 4678289 | A | 07-07-1987 | EP | 0179275 A1 | 30-04-1986 |
| | | | JP | 61080219 A | 23-04-1986 |
| US 3848104 | A | 12-11-1974 | CA | 996383 A1 | 07-09-1976 |
| | | | CH | 591171 A5 | 15-09-1977 |
| | | | DE | 2416436 A1 | 24-10-1974 |
| | | | FR | 2224902 A1 | 31-10-1974 |
| | | | GB | 1467152 A | 16-03-1977 |
| | | | IL | 44499 A | 30-04-1976 |
| | | | IT | 1011215 B | 20-01-1977 |
| | | | JP | 1153398 C | 30-06-1983 |
| | | | JP | 50003591 A | 14-01-1975 |
| | | | JP | 57044038 B | 18-09-1982 |
| | | | SE | 399326 B | 06-02-1978 |
| JP 2000121947 | A | 28-04-2000 | NONE | | |
| US 5866894 | A | 02-02-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004007136 A